# EUROPÄISCHE PATENTANMELDUNG

(11) **EP 1 503 205 A1**
(43) Veröffentlichungstag der Anmeldung: **02.02.2005**
(21) Anmeldenummer: 03017430.4
(22) Anmeldetag: 01.08.2003
(51) Int. Cl.: G01N 21/64, G02B 5/20

(54) **Optisches Filter sowie optische Einrichtung mit einem solchen Filter**

(71) Anmelder: Diamantidis, Georg, 56307 Dernbach (DE)
(72) Erfinder: Diamantidis, Georg, 56307 Dernbach (DE)
(74) Vertreter: Ostertag, Ulrich, Dr.

(57) **Zusammenfassung**

Ein optisches Filter weist neben einem Durchlässigkeitsbereich (14) im Wellenlängenbereich der Chlorophyllfluoreszenz zwischen etwa 650 und mindestens 800 nm eine zusätzliche Durchlässigkeitsbande (16) in einem Wellenlängenbereich von etwa 520 bis etwa 560 nm auf. Die zusätzliche Durchlässigkeitsbande (16) dient dazu, die physiologische Besonderheit des menschlichen Auges auszunutzen, dass es bei Dunkelheit durch grüne Lichtstrahlung im Wellenlängenbereich um 540 nm in eine größere Empfindlichkeit "geschaltet" wird, die dann auch der Erkennung der Chlorophyllfluoreszenz zugute kommt. Durch das Filter (10) tritt anteilig immer Strahlung in dem Wellenlängenbereich um 540 nm, wodurch das Erkennen der Chlorophyllfluoreszenz deutlich erleichtert wird. Dasselbe Filter (10) kann auch zur Betrachtung des grünen Bildes genutzt werden, das von herkömmlichen Nachtsichtgeräten erzeugt wird.

## Beschreibung

Die Erfindung betrifft ein optisches Filter mit einem Durchlässigkeitsbereich im spektralen Bereich der Chlorophyllfluoreszenz zwischen etwa 650 nm und mindesten 800 nm und mit mindestens einer zusätzlichen Durchlässigkeitsbande in einem kurzwelligeren Bereich sowie eine optische Einrichtung mit einem solchen Filter.

Ein solches Filter ist aus der DE 39 09 434 C2 bekannt.
Das dort verwendete Filter weist neben dem im roten Wellenlängenbereich liegenden Durchlässigkeitsbereich eine zusätzliche Durchlässigkeitsbande in einem Wellenlängenbereich zwischen 400 und 525 nm auf, welche bei 470 nm ihr Maximum hat. Diese zusätzliche Durchlässigkeitsbande bei kürzeren Wellenlängen im Vergleich zu den Wellenlängen der Chlorophyllfluoreszenz erfüllt zwei Funktionen. Zum einen dient sie dazu, dem Betrachter die Umgebung, also Gegenstände und Lebewesen, welche kein Chlorophyll enthalten, in möglichst natürlichen Farben erscheinen zu lassen. Zum anderen berücksichtigt die zusätzliche Durchlässigkeitsbande die physiologische Besonderheit des menschlichen Auges, in dunkler Umgebung durch Lichtstrahlung in einem kürzeren Wellenlängenbereich in einen höheren Empfindlichkeitszustand gebracht werden zu können, der für den gesamten Wellenlängenbereich des sichtbaren Lichts, also auch für rotes Licht, wirksam ist.

Das in der DE 39 09 434 C2 beschriebene Filter bietet einen guten Kompromiß, um beide Effekte mit nur einer zusätzlichen Durchlässigkeitsbande auszunutzen.

Aufgabe der vorliegenden Erfindung ist es, ein Filter der eingangs genannten Art derart weiterzuentwickeln, dass es eine noch bessere Wirksamkeit in Hinsicht auf die Erhöhung der Empfindlichkeit des menschlichen Auges entfaltet.

Diese Aufgabe wird erfindungsgemäß dadurch gelöst, dass die zusätzliche Durchlässigkeitsbande in einem Wellenlängenbereich von etwa 520 nm bis etwa 560 nm liegt.

Durch die vorliegende Erfindung ist es gelungen, die Sensibilisierung des menschlichen Auges durch Licht im angegebenen Wellenlängenbereich weiter zu steigern.

Es ist vorteilhaft, wenn die zusätzliche Durchlässigkeitsbande eine Bandenbreite von 10 bis 30 nm aufweist. Durch eine schmale Durchlässigkeitsbreite wird die auf das menschliche Auge treffende Strahlung im Wellenlängenbereich des grünen Lichts stark auf Wellenlängen beschränkt, auf die das Auge empfindlich reagiert.

Eine weitere Optimierung liegt vor, wenn die Durchlässigkeitsbande eine Bandenbreite von 20 nm aufweist.

Wenn die zusätzliche Durchlässigkeitsbande von 530 bis 550 nm reicht, wird der Wellenlängenbereich annähernd optimal getroffen, durch den das menschliche Auge in einen höheren Empfindlichkeitszustand gebracht wird.

Bevorzugt weist das erfindungsgemäße Filter eine zweite zusätzliche Bande auf, welche in einem Wellenlängenbereich zwischen etwa 360 und etwa 430 nm liegt. Durch diese Bande tritt Strahlung mit einem Blauanteil, welche von nicht Chlorophyll enthaltenden Objekten stammt, durch das Filter, wodurch diese Objekte gut von den rote Chlorophyllfluoreszenz ausstrahlenden lebenden Pflanzen zu unterscheiden sind.

Es ist vorteilhaft, wenn die zweite zusätzliche Durchlässigkeitsbande eine Bandenbreite von 20 bis 40 nm hat. So kann ein Durchtritt von zur Erzielung des gewünschten Effektes unnötigem Licht verhindert werden, durch welches das Verhältnis der Intensitäten von Chlorophyllfluoreszenz und anderem Licht verschlechtert würde.

Vorzugsweise ist die zweite zusätzliche Bande nur 30 nm breit. Dies führt zu dem gewünschten Effekt bei einem guten Verhältnis der Intensitäten von Chlorophyllfluoreszenz und anderem Licht.

Reicht die zweite Durchlässigkeitsbande von 380 bis 410 nm, so ist das Filter in Hinsicht auf die Unterscheidbarkeit von chlorophyllfreien Objekten und chlorophyllhaltigen Pflanzen weiter optimiert.

Es ist besonders vorteilhaft, wenn die Transmissionen des Durchlässigkeitsbereichs im Wellenlängenbereich der Chlorophyllfluoreszenz und der zusätzlichen Duchlässigkeitsbanden unterschiedlich sind. Mit dieser Maßnahme können die entsprechenden Durchlässigkeiten optimal aufeinander abgestimmt werden.

Bevorzugt liegt die Transmission des Durchlässigkeitsbereichs im Wellenlängenbereich der Chlorophyllfluoreszenz zwischen etwa 52 % und etwa 72 %, die Transmission der ersten zusätzlichen Durchlässigkeitsbande zwischen etwa 4 % und etwa 12 % und die der zweiten zusätzlichen Durchlässigkeitsbande zwischen etwa 25 % und etwa 35 %. Mit diesen Verhältnissen der Transmissionen wird beiden gewünschten Effekten, der Sensibilisierung des menschlichen Auges und der Unterscheidbarkeit von nicht chlorophyllhaltigen Objekten von chlorophyllhaltigen Pflanzen, Rechnung getragen.

Wenn die Transmission des Durchlässigkeitsbereichs im Wellenlängenbereich der Chlorophyllfluoreszenz 62 %, die der ersten zusätzlichen Durchlässigkeitsbande 8 % und die der zweiten zusätzlichen Durchlässigkeitsbande 30 % beträgt, sind die Transmissionsverhältnisse vorteilhaft aufeinander abgestimmt.

Ein weiterer Aspekt der vorliegenden Erfindung betrifft den Einsatz des erfindungsgemäßen Filters in optischen Einrichtungen, um die Wirkung des Filters mit der besseren Sicht durch eine optische Einrichtung zu kombinieren. Wird das erfindungsgemäße Filter in Verbindung mit einer solchen optischen Einrichtung verwendet, können Schwächen des menschlichen Auges, wie z.B. eine begrenzte Weitsicht und/oder Nachtsicht, überwunden werden.

Vorteilhaft ist es daher, wenn das erfindungsgemäße Filter in einem Fernglas verwendet wird, um z.B. bei der Jagd Wild in einem Dickicht aus Chlorophyll enthaltenden Pflanzen gut ausmachen zu können.

Die Verwendung des erfindungsgemäßen Filters in einem Nachtsichtgerät mit Restlichtverstärker führt zu Vorteilen in Hinblick auf eine geringere Beanspruchung des menschlichen Auges.

Handelsübliche Nachtsichtgeräte produzieren ein grün erscheinendes Bild auf einem phosphoreszierenden Schirm. Eine lange Benutzung eines solchen Nachtsichtgerätes bei dieser Wellenlänge kann zu einer Überreaktion des menschlichen Auges und einer entsprechenden Ermüdung desselben führen. Der Einsatz des erfindungsgemäßen Filters in einem solchen Nachtsichtgerät führt dazu, dass dessen üblicherweise grünes Bild dem Betrachter rot-violett erscheint. Dieses Bild beansprucht das menschliche Auge nicht so stark wie ein grünes Bild.

Nachfolgend werden Ausführungsbeispiele der Erfindung anhand der Zeichnung näher beschrieben; es zeigen
- Figur 1: schematisch ein Transmissionsspektrum eines optischen Filters zur Betrachtung der Umwelt durch das menschliche Auge;
- Figur 2: schematisch ein Fernglas, welches das optische Filter von Figur 1 umfasst; und
- Figur 3: schematisch ein Nachtsichtgerät, welches das optische Filter von Figur 1 umfasst.

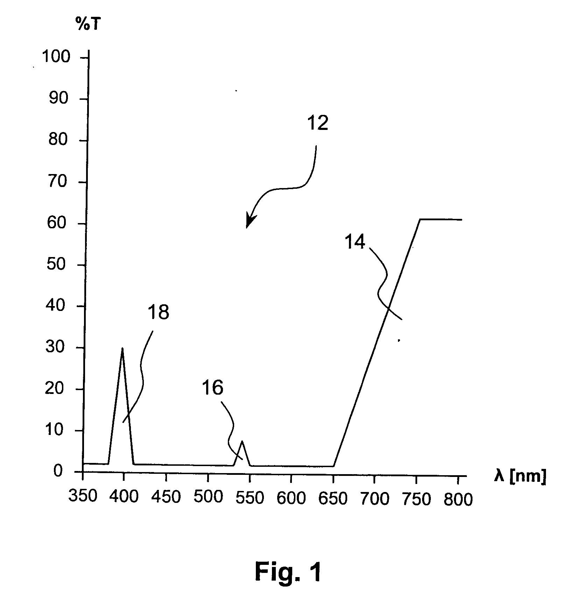

Figur 1 zeigt das Transmissionsspektrum eines optischen Filters, das der direkten Erkennung der Chlorophyllfluoreszenz, welche von allen lebenden, chlorophyllhaltigen Pflanzen ausgesandt wird, durch das menschliche Auge dient.

Zu diesem Zweck weist das Filter einen Durchlässigkeitsbereich 14 mit einem relativ hohen Transmissionsgrad von 62 % im Wellenlängenbereich zwischen 650 bis mindestens 800 nm auf. In diesem Wellenlängenbereich liegt die Chlorophyllfluoreszenzstrahlung.

Neben diesem Durchlässigkeitsbereich 14 reicht eine erste zusätzliche Durchlässigkeitsbande 16 mit einer deutlich geringeren Transmission von 8 % von 530 nm bis 550 nm. Eine zweite zusätzliche Durchlässigkeitsbande 18 mit einer mittleren Trasmission von 30 % reicht von 380 nm bis 410 nm .

Die Durchlässigkeitsbande 16 dient dazu, eine physiologische Besonderheit des menschlichen Auges vorteilhaft auszunutzen. Das menschliche Auge weist eine hohe Empfindlichkeit im spektralen Bereich des grünen sichtbaren Lichtes auf. Trifft nun neben Licht mit der Wellenlänge der Chlorophyllfluoreszenz im langwelligen Bereich noch zusätzlich ein Anteil Licht mit einer Wellenlänge im Bereich des grünen sichtbaren Lichtes auf das menschliche Auge, so wird dessen Empfindlichkeit generell stark erhöht und die Chlorophyllfluoreszenz erheblich besser erkannt.

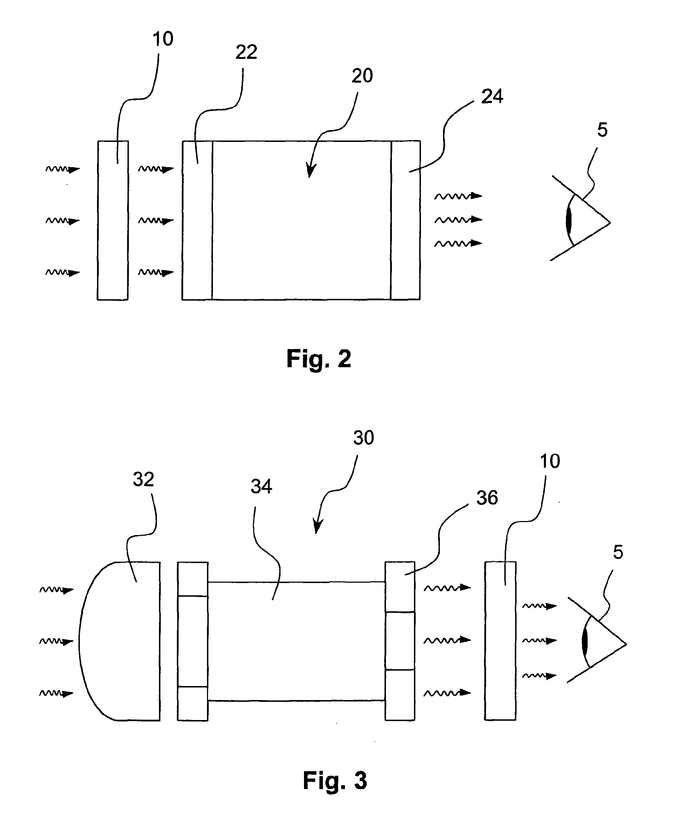

Dabei soll die auf das menschliche Auge treffende grüne Strahlung nicht zu intensiv sein, da es sonst zu einer Überreaktion des Auges kommen kann. Hierauf wird auch in Hinblick auf Figur 3 weiter unten nochmals eingegangen.

Durch die gezielte Anordnung der Durchlässigkeitsbande 16 im Bereich von 530 und 550 nm mit einer relativ geringen Durchlässigkeit wird die Grünempfindlichkeit des menschlichen Auges nahezu optimal genutzt, wodurch auch nur geringe Chlorophyllfluoreszenzen erkennbar werden.

Die Durchlässigkeitsbande 18 erfüllt den Zweck, einen gewissen Farbeindruck mit unterschiedlichen Farben zu erhalten, um so generell die Unterscheidbarkeit von Objekten zu erhöhen.

Das Filter, dessen Transmissionsspektrum in Figur 1 dargestellt ist, kann nicht nur zur direkten Betrachtung der Umwelt mit dem Auge sondern auch in Kombination mit visuellen Hilfseinrichtungen verwendet werden. Dies ist in den Figuren 2 und 3 veranschaulicht.

Figur 2 zeigt schematisch die Verwendung des Filters, das dort das Bezugszeichen 10 trägt, in einem Fernglas 20. Dazu ist das Filter 10 der Eingangslinse 22 des Fernglases 20 vorgelagert. So werden die Eigenschaften des Filters mit einer verbesserten Weitsicht kombiniert.

Das auf die Eingangslinse 22 des Fernglases 20 treffende Licht hat vorher das Filter 10 durchlaufen und enthält nur noch die oben genannten Wellenlängenbereiche des Durchlässigkeitsbereiches 14 und der Durchlässigkeitsbanden 16, 18. Dieses Licht trifft dann nach Passieren des Okulars 24 des Fernglases 20 auf das menschliche Auge 5.

Bei der Verwendung in einem Fernglas 20 werden die gleichen Effekte des Filters 10 wirksam, welche oben mit Bezug auf Figur 1 beschrieben wurden.

In Figur 3 ist schematisch die Verwendung des Filters 10 in einem Nachtsichtgerät 30 gezeigt.

Das Nachtsichtgerät 30 umfasst eine Abbildungsoptik 32, einen Restlichtverstärker 34 sowie einen phosphoreszierenden Schirm 36. Einfallende Strahlung wird von der Abbildungsoptik 32 auf den Restlichtverstärker 34 abgebildet und durch diesen elektronisch verstärkt. Das verstärkte Bild wiederum wird auf dem phosphoreszierenden Schirm 36 gezeigt und mit dem menschlichen Auge betrachtet.

Zwischen dem Betrachter 5 und dem phosphoreszierenden Schirm 36 ist das Filter 10 angeordnet.

Üblicherweise erzeugen in Nachtsichtgeräten verwendete phosphoreszierende Schirme ein grünes Bild, das zu einer raschen Ermüdung des menschlichen Auges führen kann.

Da das von herkömmlichen phosphoreszierenden Schirmen abgegebene Licht auch einen Rotanteil aufweist, führt das Filter 10 nun dazu, dass der übermäßige, das menschliche Auge ermüdende Grünanteil des von dem phosphoreszierenden Schirm 32 abgegebene Licht weitestgehend, aber nicht vollständig, herausgefiltert wird. Der verbleibende Grünanteil reicht aus, um die Empfindlichkeit des menschlichen Auges in diesem Bereich für ein gutes Erkennen des Bildes auszunutzen, ohne dieses zu überstrapazieren und zu ermüden.

Für den Rotanteil der von dem phosphoreszierenden Schirm 36 abgegebenen Strahlung ist das Filter 10 besser durchlässig als für grüne Strahlung. In dem das Filter 10 durchtretende Licht ist daher das Intensitätsverhältnis von rotem zu grünem Licht zugunsten des roten Lichts verschoben.

Dies hat zur Folge, dass das normalerweise grüne, das Auge stark beanspruchende Bild des phosphoreszierenden Schirmes 36 dem Betrachter rot-violett erscheint. Dies ist vor allem bei einer längeren Betrachtung des Bildes vorteilhaft. Die durch ein grünes Bild hervorgerufene Überstrapazierung der Farbstäbchen des Auges kann dazu führen, dass der Betrachter auch nach Absetzen des Nachtsichtgerätes 30 mehrere Minuten einen grünen Punkt sieht. Eine solche Reaktion tritt bei dem angenehmeren, die Augen nicht strapazierenden rot-violett erscheinenden Bild nicht auf.

Zwar ist es für die Funktion des Filters 10 in einem Nachtsichtgerät 30 nicht unbedingt nötig, dass das Filter 10 die Durchlässigkeitsbande 18 aufweist. Da diese Durchlässigkeitsbande 18 die Anwendung des Filters 10 in einem Nachtsichtgerät 30 aber nicht einschränkt, ist es vorteilhaft, ein Filter zu produzieren, welches alle drei Durchlässigkeitsbanden 14, 16, 18 aufweist. Dieses kann dann je nach Bedarf eingesetzt werden.

## Patentansprüche

1. Optisches Filter mit einem Durchlässigkeitsbereich (14) im spektralen Bereich der Chlorophyllfluoresenz zwischen etwa 650 nm und mindestens 800 nm und mit mindestens einer zusätzlichen Durchlässigkeitsbande (16) in einem kurzwelligen Bereich,
**dadurch gekennzeichnet, dass**
die zusätzliche Durchlässigkeitsbande (16) in einem Wellenlängenbereich von etwa 520 nm bis etwa 560 nm liegt.

2. Optisches Filter nach Anspruch 1, **dadurch gekennzeichnet, dass** die zusätzliche Durchlässigkeitsbande (16) eine Bandenbreite von 10 bis 30 nm aufweist.

3. Optisches Filter nach Anspruch 2, **dadurch gekennzeichnet, dass** die zusätzliche Durchlässigkeitsbande (16) eine Bandenbreite von 20 nm aufweist.

4. Optisches Filter nach Anspruch 3, **dadurch gekennzeichnet, dass** die zusätzlichen Durchlässigkeitsbande (16) von 530 nm bis 550 nm reicht.

5. Optisches Filter nach einem der Ansprüche 1 bis 4, **dadurch gekennzeichnet, dass** das Filter (10) eine zweite zusätzliche Durchlässigkeitsbande (18) in einem Wellenlängenbereich von etwa 360 nm bis etwa 430 nm aufweist.

6. Optisches Filter nach Anspruch 5, **dadurch gekennzeichnet, dass** die zweite zusätzliche Durchlässigkeitsbande (18) eine Bandenbreite von 20 bis 40 nm aufweist.

7. Optisches Filter nach Anspruch 6, **dadurch gekennzeichnet, dass** die zweite zusätzliche Durchlässigkeitsbande (18) eine Bandenbreite von 30 nm aufweist.

8. Optisches Filter nach Anspruch 7, **dadurch gekennzeichnet, dass** die zweite Durchlässigkeitsbande (18) von 380 nm bis 410 nm reicht.

9. Optisches Filter nach einem der Ansprüch 1 bis 8, **dadurch gekennzeichnet, dass** die Transmissionen des Durchlässigkeitsbereichs (14) im Wellenlängenbereich der Chlorophyllfluoreszenz und der zusätzlichen Durchlässigkeitsbanden (16, 18) unterschiedlich sind.

10. Optisches Filter nach Anspruch 9 unter Rückbezug auf einen der Ansprüche 5 bis 8, **dadurch gekennzeichnet, dass** die Transmission des Durchlässigkeitsbereichs (14) im Wellenlängenbereich der Chlorophyllfluoreszenz zwischen etwa 52 % und etwa 72 %, die Transmission der ersten zusätzlichen Durchlässigkeitsbande (16) zwischen etwa 4 % und etwa 12 % und die Transmission der zweiten zusätzlichen Durchlässigkeitsbande (18) zwischen etwa 25 % und etwa 35 % liegt.

11. Optisches Filter nach Anspruch 10, **dadurch gekennzeichnet, dass** die Transmission des Durchlässigkeitsbereichs (14) im Wellenlängenbereich der Chlorophyllfluoreszenz 62 %, die Transmission der ersten zusätzlichen Durchlässigkeitsbande (16) 8 % und die Transmission der zweiten zusätzlichen Durchlässigkeitsbande (18) 30 % beträgt.

12. Optische Einrichtung, **dadurch gekennzeichnet, dass** sie ein optisches Filter (10) nach einem der Ansprüche 9 bis 11 umfasst.

13. Optische Einrichtung nach Anspruch 12, **dadurch gekennzeichnet, dass** es sich um ein Fernglas (20) handelt.

14. Optische Einrichtung nach Anspruch 12, **dadurch gekennzeichnet, dass** es sich um ein Nachtsichtgerät (30) mit einem Restlichtverstärker (34) handelt.
